# EUROPÄISCHE PATENTSCHRIFT

(11) **EP 2 807 311 B1**
(45) Veröffentlichungstag und Bekanntmachung des Hinweises auf die Patenterteilung: **22.11.2017**
(21) Anmeldenummer: 13701432.0
(22) Anmeldetag: 23.01.2013
(51) Int. Cl.: E03F 1/00

(54) **Einheit aus Rigolenkörper und Deckelelementen**
Unit with a drain body and cover elements
Unité d'un élément de rigole et des éléments de couvercle

(30) Priorität: 24.01.2012 DE 102012100555
(43) Veröffentlichungstag der Anmeldung: 03.12.2014
(73) Patentinhaber: ACO Severin Ahlmann GmbH & Co. KG, 24782 Büdelsdorf (DE)
(72) Erfinder: WICHMANN, Thorsten, 24217 Schönberg (DE); MEINCKE, Arne, 24251 Osdorf (DE); MIEZE, Jan, 24111 Kiel (DE)
(74) Vertreter: Bohnenberger, Johannes
(86) Internationale Anmeldenummer: PCT/EP2013/051202
(87) Internationale Veröffentlichungsnummer: WO 2013/110637

(56) Entgegenhaltungen:
- EP-A1- 0 481 937
- EP-A2- 1 416 099
- WO-A1-2007/141035
- WO-A1-2011/042415
- CA-A1- 1 158 568
- DE-A1-102008 005 197
- FR-A1- 2 917 384
- US-A1- 2009 279 953

## Beschreibung

Die Erfindung betrifft eine Einheit aus einem Rigolenkörper und mehreren Deckelelementen zum Abdecken von Öffnungen in einer horizontalen Oberfläche des Rigolenkörpers nach dem Oberbegriff des Patentanspruches 1.

Rigolen sind in den Boden einzubauende Bauwerke, welche (Oberflächen-) Wasser aufnehmen und sukzessive in das Erdreich abgeben. Zum einen müssen derartige Bauwerke mit nur geringen Sperren Wasser aufnehmen und abgeben können, zum anderen müssen sie sehr stabil sein, damit auch größere Oberflächenlasten (z.B. beim Befahren durch einen LKW) aufgenommen werden können. Diese Lasten wirken zum einen vertikal auf die Rigole, zum anderen treten aber durchaus auch nicht unbeträchtliche horizontale Belastungen dann auf, wenn z.B. ein Fahrzeug neben dem Einbauort vorbeifährt, da im Erdreich eine Kraftverteilung (je nach Materialzusammensetzung des Erdreiches) auch in horizontaler Richtung stattfindet.

Aus der WO 2011/042415 A1 ist ein Rigolenkörper der eingangs genannten Art bekannt. Die Öffnungen in der horizontalen Oberfläche des Rigolenkörpers sind durch Deckelelemente verschlossen, die in ihrem Abdeckbereich eine Gitterstruktur mit einer Wabenform aufweist, die Stützelemente bildet. Ein mittiger Längsschnitt (oder eine Seitenansicht) des Deckelelementes hat eine rechteckige Kontur.

Das bekannte Deckelelement ist relativ materialaufwändig und weist nur eine begrenzte Lastaufnahmefähigkeit auf.

Der Erfindung liegt die Aufgabe zu Grunde, eine Rigole der eingangs genannten Art dahingehend weiterzubilden, dass bei geringem Materialaufwand eine erhöhte Lastaufnahmefähigkeit sichergestellt und der Zusammenbau erleichtert werden.

Diese Aufgabe wird durch eine Einheit nach Anspruch 1 gelöst, und zwar durch eine Einheit aus einem Rigolenkörper (10) und mehreren Deckelelemente (20) zum Abdecken von Öffnungen (11) in einer Oberfläche (16) des Rigolenkörpers (10), wobei die mehreren Deckelelemente (20) mittels Verbindungsstreben (30) zu Gruppen zusammengefasst sind, wobei jedes der Deckelelemente (20) einen Randbereich (21) zur Abstützung des Deckelelements am Rigolenkörper (10) und einen Abdeckbereich (22) umfasst, der eine Gitter- oder Lochstruktur mit Stützelementen (23) aufweist, wobei die Stützelemente (23) vom Randbereich (21) ausgehend in Richtung auf randferne Bereiche eine in Vertikalrichtung zunehmende Dicke derart aufweisen, dass jedes Deckelelement (20) im Wesentlichen eine plankonvexe Außenkontur aufweist, wobei die Verbindungsstreben (30) Biegebereiche (31, 32) derart aufweisen, dass die Deckelelemente (20) in horizontaler Richtung gegeneinander elastisch verschiebbar sind.

Durch diese Bauform wird überraschenderweise nicht nur bei vertikaler (senkrecht auf das Deckelelement wirkender) Kraft eine erhöhte Belastbarkeit sichergestellt, vielmehr ist auch bei einer Belastung in der Oberflächenrichtung eine erheblich erhöhte Lastaufnahmefähigkeit sichergestellt. Gleichzeitig werden hierbei der Materialaufwand verringert und der Zusammenbau erleichtert.

Es sei betont, dass ein Einbau der Deckelelemente in Bodenflächen (bzw. -öffnungen) der Rigolenkörper ebenso erfindungsgemäß ist.

Vorzugsweise ist der konvexe Bereich des Deckelelements an seiner Unterseite derart ausgebildet, dass er in die Öffnung ragt. Dadurch werden sowohl vertikal als auch horizontal auf das Deckelelement wirkende Kräfte in Zugkräfte umgewandelt, gegenüber denen auch relativ filigran und materialsparend gestaltete Bauelemente sehr widerstandsfähig sind.

Die Stützelemente der Gitterstruktur sind vorzugsweise als Wabenstruktur, insbesondere mit sechseckigen Waben ausgebildet. Dadurch ergibt sich eine besonders gleichmäßige Kraftverteilung bei gleichzeitig hohen Durchlassquerschnitten für einfließendes Wasser.

Vorzugsweise weisen die Stützelemente an ihren Unterrändern Verstärkungselemente auf. Durch diesen Anbringungsort der Verstärkungselemente kann bei einem relativ geringen Materialaufwand und dennoch leichter Spritzgießbarkeit eine weitere, wesentliche Erhöhung der Lastaufnahmefähigkeit erzielt werden. Die Stützelemente sind vorzugsweise in der Mitte der Deckelelemente über ein horizontales Plattenbauteil miteinander verbunden und abgeschlossen. Dadurch ergibt sich eine besonders gleichmäßige Lastverteilung.

Vorzugsweise sind Fixierelemente zum Befestigen des Deckelelements in der Öffnung vorgesehen. Dies ist insbesondere bei einem Transport oder einer ersten Montage der Deckelelemente von Vorteil.

Vorzugsweise sind die Deckelelemente in der Draufsicht rund zum Abdecken runder Öffnungen ausgebildet. Dadurch ergibt sich eine Vergleichmäßigung der Lastaufnahmefähigkeit in Horizontalrichtung.

Vorzugsweise ist der Randbereich zur Aufnahme von in Richtung der Oberfläche wirkenden Schubkräfte formschlüssig zum Rigolenkörper in die Öffnung einsetzbar. Es findet also bei Einwirkung einer in Oberflächenrichtung wirkenden Kraft nicht zunächst eine Verformung des Rigolenkörpers und der Öffnung statt, bevor der Deckel die Kraft auffängt. Dadurch ergibt sich ebenfalls eine Erhöhung der Lastaufnahmefähigkeit des gesamten Gebildes.

Vorzugsweise sind die Randbereiche abgesenkt in die Öffnung einsetzbar, wodurch sich ebenfalls eine Erhöhung der Belastbarkeit des Deckelelementes ergibt.

Nachfolgend wird eine bevorzugte Ausführungsform der Erfindung anhand von Abbildungen näher erläutert. Hierbei zeigen
- Fig. 1: eine Draufsicht auf eine Vierergruppe von Deckelelementen,
- Fig. 2: eine Unteransicht der Anordnung nach Fig. 1,
- Fig. 3: eine Seitenansicht der Anordnung nach den Fig. 1 und 2,
- Fig. 4: eine Detailansicht des in Fig. 2 gezeigten Ausschnittes,
- Fig. 5: einen Schnitt entlang der Linie V-V aus Fig. 2,
- Fig. 6: einen Schnitt entlang der Linie VI-VI aus Fig. 2, Ist nicht auf der Zeichnung
- Fig. 7: eine perspektivische Ansicht auf die Unterseite der Anordnung gemäß Fig. 2,
- Fig. 8: eine perspektivische Draufsicht auf die Anordnung nach Fig. 1 und
- Fig. 9: einen Rigolenkörper bzw. eine Flächeneinheit, wie sie aus dem Stand der Technik bekannt sind.

In der nachfolgenden Beschreibung werden für gleiche und gleich wirkende Teile dieselben Bezugsziffern verwendet.

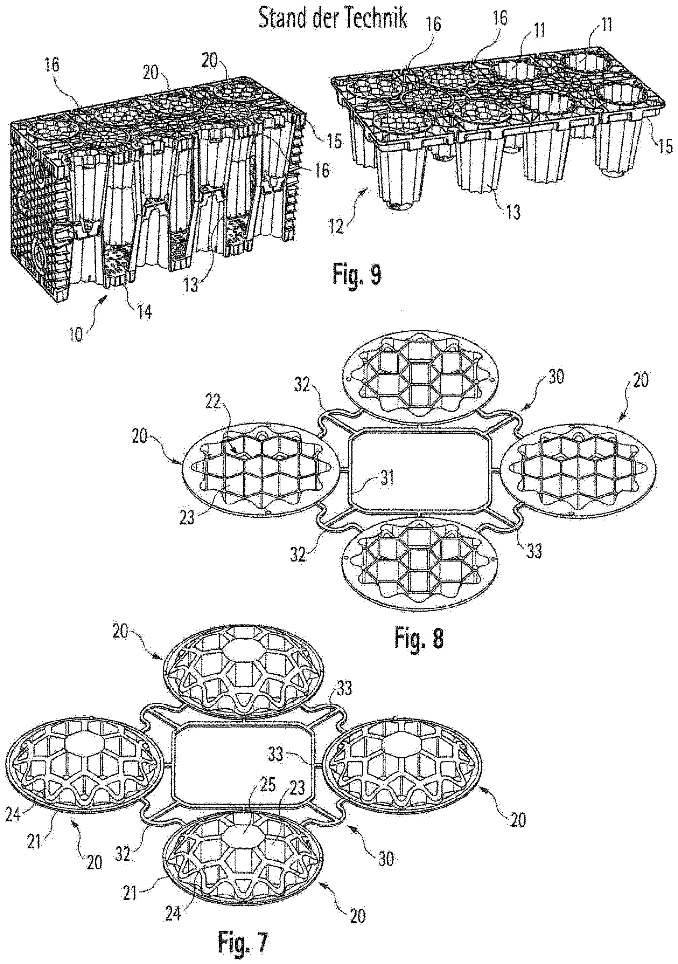

Zunächst wird ein Rigolenkörper nach dem Stand der Technik anhand der beiliegenden Fig. 9 beschrieben.

Eine Rigole wird aus mehreren Rigolenkörpern 10 zusammengebaut, die jeweils eine Bodeneinheit 14 und eine Deckeleinheit 15 umfassen, die jeweils identisch aus Flächeneinheiten 12 aufgebaut sind. Jede Flächeneinheit 12 weist Abstandselemente 13 auf, die so ausgebildet sind, dass eine Deckeleinheit 15 fest auf eine Bodeneinheit 14 aufsetzbar und dort montierbar ist.

Die Abstandselemente 13 sind hohl und bilden Öffnungen 11 in den Deckeleinheiten 15 (und den Bodeneinheiten 14), die zumindest bei den Deckeleinheiten 15 mit Deckelelementen 20 verschlossen werden können, so dass oben liegendes Erdreich nicht in die Abstandselemente 13 hineinfällt.

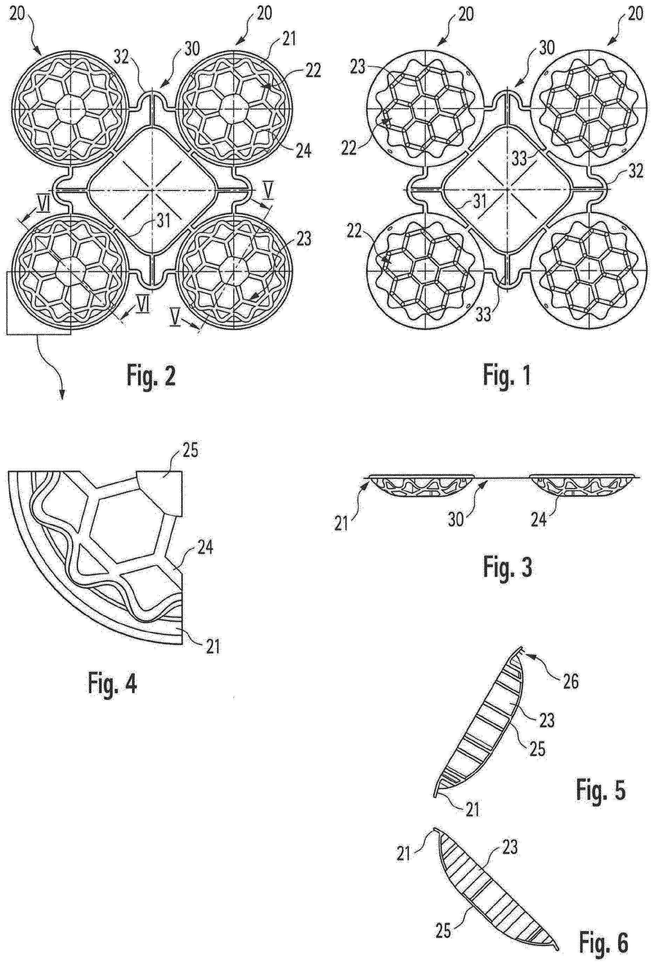

Die erfindungsgemäßen Deckelelemente 20 werden nachfolgend anhand der Fig. 1 bis 8 näher erläutert.

Die Deckelelemente 20 weisen Randbereiche 21 auf, mit denen sie auf entsprechend geformten Tragerändern der Rigolenkörper 10 so aufsetzbar sind, dass ihre Oberflächen im Wesentlichen plan mit der Oberfläche 16 der Rigolenkörper 10 verlaufen.

Die Randbereiche 21 umgeben Abdeckbereiche 22, welche durch Stützelemente 23 definiert werden, die in Form von (sechseckigen) Waben ausgebildet sind. Diese Stützelemente 23 sind - wie dies insbesondere aus den Fig. 3, 5 und 6 hervorgeht, in den mittleren Bereichen der Deckelelemente dicker bzw. höher und nehmen in ihrer Dicke bzw. Höhe in Richtung auf die Randbereiche 21 ab. Dadurch ergibt sich in der Seitenansicht bzw. in den Schnitten gemäß Fig. 5 und Fig. 6 eine Form ähnlich einer plankonvexen Linse, deren eine Fläche plan und deren andere Fläche konvex ist.

In den Randbereichen 21 sind die Deckelelemente 20 etwas nach unten abgesenkt, so dass die äußersten Ränder der Deckelelemente 20 nach dem Einsetzen in eine Öffnung 11 eines Rigolenkörpers 10 unterhalb deren Oberfläche 16 liegen. Zur Verriegelung mit dem Rigolenkörper 10 dienen Fixierelemente 26 (siehe Fig. 5), die insbesondere bei Transport und Montage wichtig sind. Sobald der Rigolenkörper 10 in das Erdreich eingebaut ist, ist ein Fixieren der Deckelelemente 20 im Rigolenkörper 10 nicht mehr notwendig.

Die Stützelemente 23 sind bandförmig ausgebildet und weisen an ihren Unterseiten Verstärkungselemente 24 auf, so dass sich Profile entsprechend einem T-Träger (umgekehrtes T) ergeben. In der Mitte laufen diese Verstärkungselemente 24 in ein Plattenteil 25, so dass sich eine äußerst zugfeste Verbindung zwischen den Stützelementen 23 bzw. den Verstärkungselementen 24 ergibt. Die so aufgebauten Deckelelemente 20 weisen nicht nur gegenüber vertikalen Kräften eine erhebliche Tragkraft auf, durch die plankonvexe Konstruktion ergibt sich vielmehr auch eine sehr hohe Widerstandsfähigkeit gegenüber Kräften in Oberflächenrichtung (horizontale Kräfte nach dem Einbau), da ein Einknicken der Verstärkungselemente aufgrund der "Verstrebungen" und des T-Querschnittes verhindert wird.

Um ein Einsetzen der Deckelelemente 20 in die Öffnungen 11 eines Rigolenkörpers 10 zu erleichtern, sind mehrere, in dem beiliegenden Ausführungsbeispiel vier Deckelelemente 20 über Verbindungsstreben 30 miteinander verbunden. Somit können immer vier Deckelelemente 20 mit einer vorgegebenen Orientierung zum Rigolenkörper 10 in die Öffnungen 11 eingebaut werden.

Nachdem die Deckelelemente 20 im Spritzgussverfahren einstückig mit den Verbindungsstreben 30 hergestellt werden, und das Material (vorzugsweise Polypropylen) zur Erzielung einer hinreichenden Festigkeit relativ steif ist, sind die Verbindungsstreben 30 so aufgebaut, dass ein Verschieben der Deckelelemente 20 in horizontaler Richtung gegeneinander ermöglicht wird. Dies wird dadurch erreicht, dass die Verbindungsstreben 30 einen Innenrahmen 31 aufweisen, der über Strebenabschnitte 33 mit jeweils einem Deckelelement 20 verbunden ist. Weiterhin sind die Deckelelemente 20 untereinander über Bogenstreben 32 miteinander verbunden, die wiederum über Strebenabschnitte 33 mit dem Innenrahmen 31 verbunden sind. Wenn nun das in Fig. 8 links liegende Deckelelement 20 gegen das rechts liegende Deckelelement 20 verschoben werden soll, so steht am Innenrahmen 31 eine relativ lange Biegestrecke zur Verfügung. Die Bogenstreben 32, welche das (in Fig. 8) links liegende Deckelelement 20 mit dem oben bzw. dem unten liegenden Deckelelement 20 verbinden, können sich aufgrund ihrer in den Abbildungen dargestellten Bogenform ebenfalls trotz hoher Materialsteifigkeit relativ leicht verformen, so dass einerseits eine hinreichende Festigkeit, andererseits aber auch eine hinreichende Elastizität der Verbindungsstreben 30 zum Ausgleich von Toleranzen gegeben ist.

### Bezugszeichenliste

- 10: Rigolenkörper
- 11: Öffnung
- 12: Flächeneinheit
- 13: Abstandselement
- 14: Bodeneinheit
- 15: Deckeleinheit
- 16: Oberfläche
- 20: Deckelelement
- 21: Randbereich
- 22: Abdeckbereich
- 23: Stützelement
- 24: Verstärkungselement
- 25: Plattenbauteil
- 26: Fixierelement
- 30: Verbindungsstreben
- 31: Innenrahmen
- 32: Bogenstrebe
- 33: Strebenabschnitt

## Patentansprüche

1. Einheit aus einem Rigolenkörper (10) und mehreren Deckelelementen (20) zum Abdecken von Öffnungen (11) in einer im eingebauten Zustand der Einheit horizontalen Oberfläche (16) des Rigolenkörpers (10), wobei die mehreren Deckelelemente (20) mittels Verbindungsstreben (30) zu Gruppen zusammengefasst sind, wobei jedes der Deckelelemente (20) einen Randbereich (21) zur Abstützung des Deckelelements am Rigolenkörper (10) und einen Abdeckbereich (22) umfasst, der eine Gitter- oder Lochstruktur mit Stützelementen (23) aufweist,
**dadurch gekennzeichnet, dass**
die Stützelemente (23) vom Randbereich (21) ausgehend in Richtung auf randferne Bereiche eine in Vertikalrichtung zunehmende Dicke derart aufweisen, dass jedes Deckelelement (20) im Wesentlichen eine plankonvexe Außenkontur aufweist, wobei die Verbindungsstreben (30) Biegebereiche (31, 32) derart aufweisen, dass die Deckelelemente (20) in horizontaler Richtung gegeneinander elastisch verschiebbar sind.

2. Einheit nach Anspruch 1, **dadurch gekennzeichnet, dass**
der konvexe Bereich jedes Deckelelements (20) an seiner Unterseite derart ausgebildet ist, dass er in die Öffnung (11) ragt.

3. Einheit nach einem der vorhergehenden Ansprüche, **dadurch gekennzeichnet, dass**
die Stützelemente (23) der Gitterstruktur als Wabenstruktur, insbesondere mit sechseckigen Waben ausgebildet sind.

4. Einheit nach einem der vorhergehenden Ansprüche, **dadurch gekennzeichnet, dass**
die Stützelemente (23) an ihren Unterrändern Verstärkungselemente (24) aufweisen, insbesondere derart, dass sich T-förmige Querschnitte ergeben.

5. Einheit nach einem der vorhergehenden Ansprüche, **dadurch gekennzeichnet, dass**
die Stützelemente (23) in der Mitte des Deckelelementes (20) über ein horizontales Plattenbauteil (25) miteinander verbunden und abgeschlossen sind.

6. Einheit nach einem der vorhergehenden Ansprüche, **dadurch gekennzeichnet, dass** jedes Deckelelement (20) Fixierelemente (26) zum Befestigen des Deckelelements (20) in der Öffnung (11) aufweist.

7. Einheit nach einem der vorhergehenden Ansprüche, **dadurch gekennzeichnet, dass** jedes Deckelelement (20) in der Draufsicht rund zum Abdecken einer runden Öffnung (11) ausgebildet ist.

8. Einheit nach einem der vorhergehenden Ansprüche, **dadurch gekennzeichnet, dass**
der Randbereich (21) zur Aufnahme von in Richtung der Oberfläche (16) wirkenden Schubkräften formschlüssig zum Rigolenkörper in die Öffnung (11) einsetzbar ist.

9. Einheit nach einem der vorhergehenden Ansprüche, **dadurch gekennzeichnet, dass**
der Randbereich (21) abgesenkt in die Öffnung (11) einsetzbar ist.

10. Einheit nach einem der vorhergehenden Ansprüche, **dadurch gekennzeichnet, dass** die Deckelelemente aus Kunststoff, vorzugsweise aus Polypropylen spritzgegossen sind.

## Claims

1. A unit comprising a drainage body (10) and a plurality of cover elements (20) for covering openings (11) in a surface (16) of the drainage body (10) which is horizontal in the unit's installed state, wherein the plurality of cover elements (20) are grouped together by means of connecting struts (30), wherein each of the cover elements (20) comprises an edge region (21) for supporting the cover element (20) on the drainage body (10) and a covering area (22), which has a lattice or perforated structure with support elements (23),
**characterised in that**
the thickness of the support elements (23) increases in a vertical direction, starting from the edge region (21) and going out to the regions farthest from the edge, so that each cover element (20) has an essentially plano-convex outer contour, wherein the connecting struts (30) have bending areas (31, 32) so that the cover elements (20) can be elastically displaced towards one another.

2. The unit according to claim 1, **characterised in that** the underside of the convex region of each cover element (20) is formed so that it protrudes into the opening (11).

3. The unit according to one of the preceding claims, **characterised in that** the support elements (23) of the lattice structure are formed as a honeycomb structure, in particular with hexagonal honeycombs.

4. The unit according to one of the preceding claims, **characterised in that** the support elements (23) have reinforcing elements (24) on their lower edges, in particular so that T-shaped cross-sections are created.

5. The unit according to one of the preceding claims, **characterised in that** the support elements (23) are connected to one another by, and end in, a horizontal plate component (25) in the centre of the cover element (20).

6. The unit according to one of the preceding claims, **characterised in that** each cover element (20) has fixing elements (26) for fixing the cover element (20) in the opening (11).

7. The unit according to one of the preceding claims, **characterised in that**, seen from above, each cover element (20) is formed as round in order to cover a round opening (11).

8. The unit according to one of the preceding claims, **characterised in that**, in order to absorb thrust forces exerted in the direction of the surface (16), the edge region (21) can be deployed in the opening (11) in a positively locking manner.

9. The unit according to one of the preceding claims, **characterised in that** the edge region (21) can be deployed in the opening (11) in a lowered manner.

10. The unit according to one of the preceding claims, **characterised in that** the cover elements (20) are injection-moulded from plastic, preferably polypropylene.

## Revendications

1. Unité constituée par un corps formant rigole (10) et par plusieurs éléments formant couvercle (20) pour recouvrir des ouvertures (11) dans une surface (16) du corps formant rigole (10) horizontale dans l'état monté de l'unité,
dans laquelle les plusieurs éléments formant couvercle (20) sont regroupés en groupes au moyen d'entretoises de liaison (30), chacun des éléments formant couvercle comprenant une zone de bord (21) pour appuyer l'élément formant couvercle sur le corps formant rigole (10), et une zone de couverture (22) qui présente une structure en grille ou une structure à trous avec des éléments de soutien (23),
**caractérisée en ce que**
à partir de la zone de bord (21), en direction des zones éloignées du bord, les éléments de soutien (23) présentent une épaisseur qui augmente en direction verticale, de telle sorte que chaque élément formant couvercle (20) présente un contour extérieur sensiblement plan convexe, et les entretoises de liaison (30) présentent des zones de flexion (31, 32) de telle sorte que les éléments formant couvercle (20) sont déplaçables élastiquement les uns par rapport aux autres en direction horizontale.

2. Unité selon la revendication 1,
**caractérisée en ce que**
sur sa face inférieure, la zone convexe de chaque élément formant couvercle (20) est réalisée de manière à pénétrer dans l'ouverture (11).

3. Unité selon l'une des revendications précédentes,
**caractérisée en ce que**
les éléments de soutien (23) de la structure en grille sont réalisés sous la forme d'une structure en nids d'abeilles, en particulier avec des alvéoles hexagonales.

4. Unité selon l'une des revendications précédentes,
**caractérisée en ce que**
sur leurs bords inférieurs, les éléments de soutien (23) comprennent des éléments de renforcement (24) en particulier de manière à obtenir des sections transversales en forme de T.

5. Unité selon l'une des revendications précédentes,
**caractérisée en ce que**
au milieu de l'élément formant couvercle (20), les éléments de soutien (23) sont reliés entre eux et se terminent par un composant formant plaque horizontale (25).

6. Unité selon l'une des revendications précédentes,
**caractérisée en ce que**
chaque élément formant couvercle (20) comprend des éléments de fixation (26) pour fixer l'élément formant couvercle (20) dans l'ouverture (11).

7. Unité selon l'une des revendications précédentes,
**caractérisée en ce que**
pour recouvrir une ouverture ronde (11), chaque élément formant couvercle (20) est réalisé rond en vue de dessus.

8. Unité selon l'une des revendications précédentes,
**caractérisée en ce que**
pour recevoir des forces de poussée agissant en direction de la surface (16), la zone de bord (21) est susceptible d'être insérée dans l'ouverture (11) par coopération de formes avec le corps formant rigole.

9. Unité selon l'une des revendications précédentes,
**caractérisée en ce que**
la zone de bord (21) est susceptible d'être insérée dans l'ouverture (11) en y étant encastrée.

10. Unité selon l'une des revendications précédentes,
**caractérisée en ce que**
les éléments formant couvercle sont moulés par injection en matière plastique, de préfé
